# EUROPÄISCHE PATENTSCHRIFT

(11) **EP 3 366 624 B1**
(45) Veröffentlichungstag und Bekanntmachung des Hinweises auf die Patenterteilung: **25.09.2019**
(21) Anmeldenummer: 17158048.3
(22) Anmeldetag: 27.02.2017
(51) Int. Cl.: B65H 57/06, F16B 9/02

(54) **BEFESTIGUNGSVORRICHTUNG ZUM ANBRINGEN EINES STRANGFÖRMIGEN ELEMENTS WIE SEIL ODER KABEL**
FASTENING DEVICE FOR ATTACHING A STRAND-SHAPED ELEMENT LIKE A ROPE OR CABLE
DISPOSITIF DE FIXATION POUR ATTACHER UN ÉLÉMENT EN FORME DE FAISCEAUX COMME PAR EXEMPLE UNE CORDE OU UN CÂBLE

(43) Veröffentlichungstag der Anmeldung: 29.08.2018
(73) Patentinhaber: BEUMER GmbH & Co. KG, 59269 Beckum (DE)
(72) Erfinder: Hermans, Hendrik, 48151 Münster (DE)
(74) Vertreter: Philipp, Matthias

(56) Entgegenhaltungen:
- US-A- 360 969
- US-A- 1 964 356
- US-A- 2 185 890
- US-A- 4 925 126

## Beschreibung

Die Erfindung betrifft eine Befestigungsvorrichtung zum Anbringen eines strangförmigen Elements wie Seil oder Kabel an einem ortsfesten Haltemittel, wie sie insbesondere für die Befestigung von Seilen von Fangnetzen bei Sortieranlagen eingesetzt werden kann. Das Fangnetz dient dazu, Teile (z. B. Pakete), die unbeabsichtigt von der Sortieranlage fallen, aufzufangen, um Verletzungen von Mitarbeitern oder Beschädigungen zu vermeiden. Hierbei wird ein Seil durch die Randmaschen des Fangnetzes gezogen und ortsfest fixiert. Die Befestigungsvorrichtung wird mit einem ortsfesten Haltemittel verbunden, beispielsweise mit einem Seitenwangenhalter der Sortieranlage.

Übliche Befestigungsmethoden für derartige Seile sind nicht ohne Werkzeug lösbare Verbindungen, wie beispielsweise Ösen, durch die das Seil hindurchgeführt werden muss, oder ohne Werkzeug lösbare Verbindungen, bei denen z. B. das Seil durch Verdrehung in eine hakenartige Aufnahme eingelegt werden kann.

Das Dokument US 4 925 126 A zeigt eine Befestigungsvorrichtung nach dem Stand der Technik.

Befestigungen für Seile, die nicht ohne Werkzeug lösbar sind, haben den Nachteil, dass die Befestigung in der Regel komplett demontiert werden muss, was einen erheblichen Zeitaufwand bedeutet und die Gefahr des Verlusts von Befestigungsmitteln mit sich bringt.

Bei ohne Werkzeug lösbaren Verbindungen besteht der Nachteil, dass das Seil in der Regel eine Vorspannung besitzt, so dass das erforderliche Verdrehen zum Einsetzen oder Lösen nicht ohne Entspannen des Seiles möglich ist. Bei ungewollt nachlassender Spannung kann sich das Seil bzw. das davon gehaltene Netz aus der Verriegelung lösen, was schwerwiegende Schäden zur Folge haben kann.

Die Aufgabe der Erfindung besteht darin, eine Befestigungsvorrichtung für Seile o. Ä. zu schaffen, die eine einfache und sichere Montage und Demontage eines Seils o. Ä., insbesondere zur Befestigung eines Fangnetzes am Gerüst einer Sortieranlage, ermöglicht.

Diese Aufgabe wird erfindungsgemäß durch eine Befestigungsvorrichtung zum Anbringen eines strangförmigen Elements wie Seil oder Kabel an einem ortsfesten Haltemittel gelöst, mit einem rohrförmigen Aufnahmekörper, der eine erste, sich um eine Längsachse des Aufnahmekörpers in einer Umfangsrichtung erstreckende Außenfläche, eine in Richtung der Längsachse verlaufende erste schlitzförmige Öffnung und einen in Richtung der in Längsachse verlaufenden ersten Aufnahmeraum zum Einlegen und Aufnehmen eines strangförmigen Elements aufweist, und mit einem Grundkörper, der eine zweite, sich um eine Längsachse des Grundkörpers in einer Umfangsrichtung erstreckende Außenfläche zum Einsetzen in eine Halteaufnahme des Haltemittels, einen zweiten, in Richtung der Längsachse verlaufenden Aufnahmeraum zum Einsetzen und Halten des Aufnahmekörpers und eine zweite, in Richtung der Längsachse verlaufende schlitzförmige Öffnung aufweist, durch die der Aufnahmekörper in den zweiten Aufnahmeraum einsetzbar ist, wobei in einem Aufnahmezustand, in dem der Aufnahmekörper in den zweiten Aufnahmeraum des Grundkörpers eingesetzt ist, der Aufnahmekörper um eine in Richtung der Längsachsen verlaufende Drehachse relativ zu dem Grundkörper verdrehbar ist, wobei der Aufnahmekörper mit einem Werkzeugansatz zum Zusammenwirken mit einem Werkzeug zum Bewirken einer Drehung um die Drehachse versehen ist.

Die zwingende Verwendung eines Werkzeugs zum Verdrehen des Aufnahmekörpers relativ zu dem Grundkörper, und insbesondere zum Öffnen der Befestigungsvorrichtung, verringert das Risiko einer ungewollten oder unbefugten Öffnung.

Es kann vorgesehen sein, dass der Aufnahmekörper im Aufnahmezustand klemmend aufgenommen ist und gegen ein vorgebbares Haltemoment drehbar ist. Das Haltemoment kann insbesondere so groß sein, dass der Aufnahmekörper nicht ohne Verwendung eines Werkzeugs verdreht werden kann.

Die erste Außenfläche kann im Querschnitt kreisförmig, oval oder abgerundet polygonal ausgebildet sein. Entsprechend kann vorgesehen sein, dass der zweite Aufnahmeraum eine Innenfläche aufweist, die im Querschnitt kreisförmig, oval oder abgerundet polygonal ausgebildet ist. Eine nicht kreiszylindrische Ausbildung der Innen- und Außenflächen bewirkt einen Rast- oder Verriegelungseffekt in Bezug auf eine Verdrehung beider Teile.

Weiterhin kann vorgesehen sein, dass der Aufnahmekörper ein erstes Rastelement und der Grundkörper ein zum Zusammenwirken mit dem ersten Rastelement bestimmtes zweites Rastelement aufweist, wobei mit den Rastelementen eine vorgegebene relative Drehstellung von Aufnahmekörper und Grundkörper rastend festlegbar oder begrenzbar ist. Die ersten und zweiten Rastelemente können beispielsweise durch eine unrunde oder abgerundet polygonale Formgebung der ersten und/oder zweiten Außenfläche von Aufnahmekörper bzw. Grundkörper gebildet sein.

Bevorzugt ist vorgesehen, dass der Aufnahmekörper und/oder der Grundkörper ein Mittel zum formschlüssigen Zusammenwirken im Aufnahmezustand aufweisen, durch das eine Verlagerung des Aufnahmekörpers in Richtung der Längsachsen aus dem zweiten Aufnahmeraum heraus verhindert ist. Dieses Mittel kann beispielsweise durch formschlüssiges Zusammenwirken durch eine bezüglich der Drehachse umlaufende Nut von Außenkörper oder Grundkörper und einen in diese Nut eingreifenden Vorsprung von Grundkörper oder Aufnahmekörper gebildet sein. Alternativ kann das Mittel zum formschlüssigen Zusammenwirken durch zwei flanschartige Begrenzungswände gebildet sein, die an dem Aufnahmekörper mit Abstand an Enden der ersten Außenfläche angeordnet sind und zwischen denen im Aufnahmezustand der Grundkörper aufnehmbar ist.

An dem Grundkörper kann ein drittes Rastelement zum Zusammenwirken mit einem vierten Rastelement der Halteaufnahme ausgebildet sein, das ein Herausbewegen des Grundkörpers aus der Halteaufnahme im eingerasteten Zustand verhindert, insbesondere im Aufnahmezustand mit dem aufgenommenen Aufnahmekörper. Das dritte Rastelement schließt bevorzugt unmittelbar an die zweite Außenfläche an.

Es kann vorgesehen sein, dass das dritte Rastelement eine Anlagefläche aufweist, die in einer Ebene liegt, die senkrecht zu einer Geraden verläuft, welche sich senkrecht zur Längsachse des Grundkörpers und durch die zweite Öffnung erstreckt

Es kann vorgesehen sein, dass sich der zweite Aufnahmeraum des Grundkörpers bezüglich der Längsachse um mehr als 180° in Umfangsrichtung erstreckt und der Grundkörper zum Einsetzen des Aufnahmekörpers quer zu der Längsachse flexibel aufweitbar ist.

Die Erfindung bezieht sich ferner auf eine Befestigungsanordnung mit einer in einer Halteaufnahme eines ortsfesten Haltemittels aufgenommenen Befestigungsvorrichtung gemäß der Erfindung, wobei der Grundkörper mit dem darin aufgenommenen Aufnahmekörper rastend in die Halteaufnahme einsetzbar oder eingesetzt ist und das dritte Rastelement zum Zusammenwirken mit dem vierten Rastelement ausgebildet ist.

Bevorzugt ist vorgesehen, dass die Halteaufnahme an Außenabmessungen des Grundkörpers im Aufnahmezustand angepasst ist und eine Aufweitung des Grundkörpers zum Herausbewegen des Aufnahmekörpers nicht zulässt.

Es kann vorgesehen sein, dass das vierte Rastelement der Halteaufnahme eine zu der Anlagefläche des Grundkörpers passende Anlagefläche aufweist.

Die Befestigungsvorrichtung besteht somit erfindungsgemäß aus zwei Teilen, einem Grundkörper und einem von diesem aufzunehmenden Aufnahmekörper, der der eigentlichen Seilaufnahme dient. Der Grundkörper kann in einen Fangnetzhalter oder Seitenwangenhalter in einer passend ausgebildeten Halteaufnahme eingerastet werden. Dafür weist der Grundköper ein Rastelement und die Halteaufnahme ein dazu passendes Rastelement auf. Eine Verdrehung des Aufnahmekörpers relativ zu dem Grundkörper erfolgt durch Ansetzen eines Werkezugs, beispielsweise eines Schraubenschlüssels oder Schraubendrehers, wobei der Werkzeugansatz des Aufnahmekörpers eine Schlüsselfläche oder einen Werkzeugschlitz aufweisen kann.

In einer Aufnahmeposition weisen die schlitzförmigen Öffnungen von Aufnahmekörper und Grundkörper in dieselbe Richtung, so dass eine Seil o. Ä. eingelegt werden kann. Anschließend kann der Aufnahmekörper z. B. um 90° oder 180° verdreht werden, wobei sich dann die Befestigungsvorrichtung in einer Halteposition befindet und das Seil bzw. das aufgenommene strangförmige Element von allen Seiten von Grundkörper und Aufnahmekörper umschlossen ist. Aufgrund der zwischen Aufnahme- und Grundkörper wirkenden Rastelemente besteht außerdem eine formschlüssige Verriegelung beider Teile.

Die Erfindung wird nachfolgend anhand eines Ausführungsbeispiels weiter erläutert, wobei auf eine Zeichnung Bezug genommen ist, in der
- Fig. 1 - 5: verschiedene Ansichten, teils im Schnitt, eines Aufnahmekörpers einer Befestigungsvorrichtung zeigen,
- Fig. 6 und 7: eine Einzelheit des Aufnahmekörpers erläutern,
- Fig. 8 - 12: verschiedene Ansichten, teils im Schnitt, eines Grundkörpers einer Befestigungsvorrichtung zeigen,
- Fig. 13 und 14: eine Einzelheit des Grundkörpers erläutern,
- Fig. 15: die Befestigungsvorrichtung mit in den Grundkörper eingesetztem Aufnahmekörper in einer offenen Stellung zeigt,
- Fig. 16: die Befestigungsvorrichtung nach Fig. 15 teilweise in Längsrichtung aufgeschnitten zeigt,
- Fig. 17: die Befestigungsvorrichtung nach Fig. 15 in einer geschlossenen Stellung zeigt,
- Fig. 18: die Befestigungsvorrichtung nach Fig. 17 teilweise in Längsrichtung aufgeschnitten zeigt,
- Fig. 19: eine Befestigungsanordnung mit einer Befestigungsvorrichtung nach Fig. 15 in offener Stellung vor dem Einsetzen in eine Halteaufnahme eines ortsfesten Haltemittels zeigt,
- Fig. 20: die Befestigungsanordnung nach Fig. 19 im eingesetzten Zustand zeigt,
- Fig. 21: die Befestigungsanordnung nach Fig. 20 vor Einlegen eines Seils zeigt,
- Fig. 22: die Befestigungsanordnung nach Fig. 21 mit eingelegtem Seil zeigt, und
- Fig. 23: die Befestigungsanordnung nach Fig.22 mit eingelegtem Seil in geschlossener Stellung zeigt.

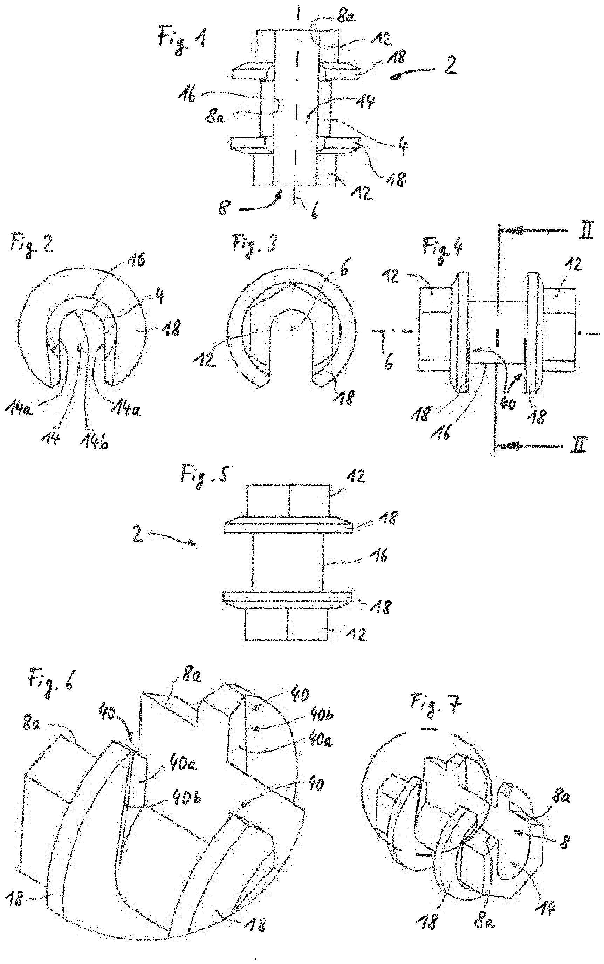

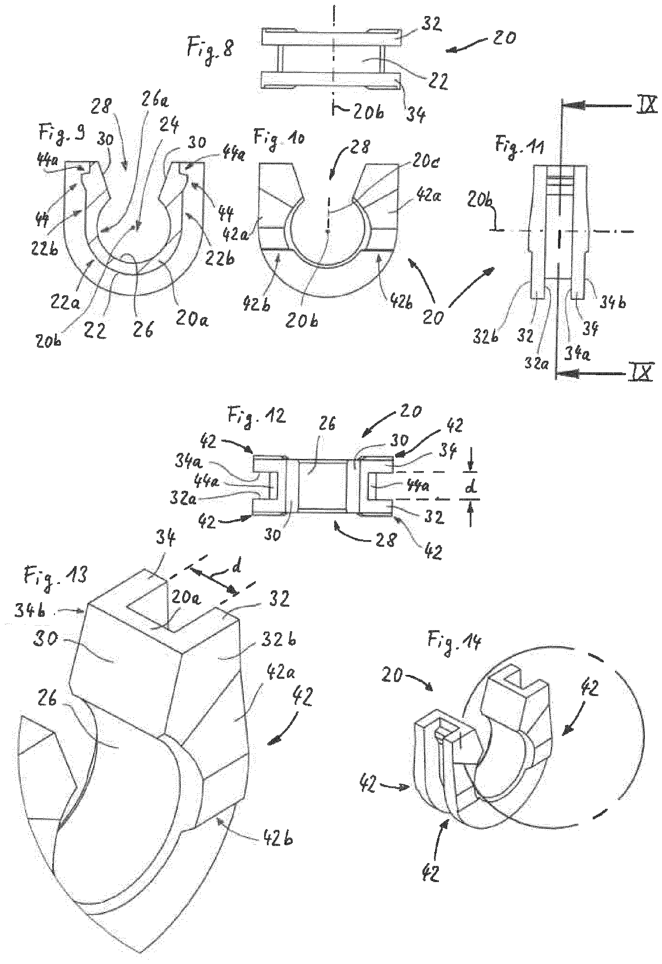

In Figur 1 bis 7 ist ein Aufnahmekörper und in Figur 8 bis 14 ein Grundkörper dargestellt, die Teile einer erfindungsgemäßen Befestigungsvorrichtung sind. Fig. 1 zeigt eine Draufsicht von oben, Fig. 5 eine Draufsicht von unten, Fig. 3 eine stirnseitige Ansicht und Fig. 2 eine Schnittansicht gemäß der in Fig. 4 angegebenen Schnittlinie. Fig. 6 zeigt eine Ausschnittsvergrößerung aus einer perspektivischen Ansicht gemäß Fig. 7.

Der Aufnahmekörper 2 weist einen rohrförmigen Wandabschnitt 4 auf, der sich in Bezug auf eine Längsachse 6 um etwa 270° in Umfangsrichtung erstreckt und eine in Richtung der Längsachse 6 verlaufende schlitzartige Öffnung 8 und einen daran anschließenden ersten Aufnahmeraum 14 bildet. Der Wandabschnitt 4 ist an seinen längsseitigen Enden jeweils mit einem Werkzeugansatz 12 versehen, der in dem dargestellten Ausführungsbeispiel annähernd, soweit es die Öffnung 8 zulässt, als Sechseckprofil ausgebildet ist. Alternativ könnte hier beispielsweise ein quer zur Längsrichtung verlaufender Schlitz zum Ansetzen eines Schraubendrehers o. Ä. vorgesehen sein.

Anschließend an die in Längsrichtung verlaufende Öffnung 8 weist der Aufnahmekörper 2 innen den Aufnahmeraum 14 sowie außen eine sich um die Längsachse 6 in Umfangsrichtung erstreckende erste Außenfläche 16 auf. Der Aufnahmeraum 14 ist in dem dargestellten Ausführungsbeispiel im Querschnitt U-förmig mit parallelen Seitenwänden 14a, die an Ränder 8a der Öffnung 8 anschließen, und einem an die Seitenwände 14a anschließenden, im Querschnitt halbkreisförmigen Abschnitt 14b in einem von der Öffnung 8 entfernten Bereich des Aufnahmeraums 14. Hierbei entspricht der Abstand der Seitenwände 14a voneinander dem Durchmesser des im Querschnitt halbkreisförmigen Abschnitts 14b. In anderen Ausführungsformen könnte der Durchmesser des halbkreisförmigen Abschnitts 14b größer sein als der gegenseitige Abstand der Seitenwände 14a oder der Ränder 8a der Öffnung 8.

Die erste Außenfläche 16 des Aufnahmekörpers 2 ist zylindrisch um die Längsachse 6, und kann konzentrisch zu dem im Querschnitt halbkreisförmigen Abschnitt 14b des Aufnahmeraums 14 sein. Alternativ kann die Außenfläche 16, auch als erste Außenfläche bezeichnet, im Querschnitt oval oder abgerundet polygonal, um die Längsachse 6 herum, ausgebildet sein.

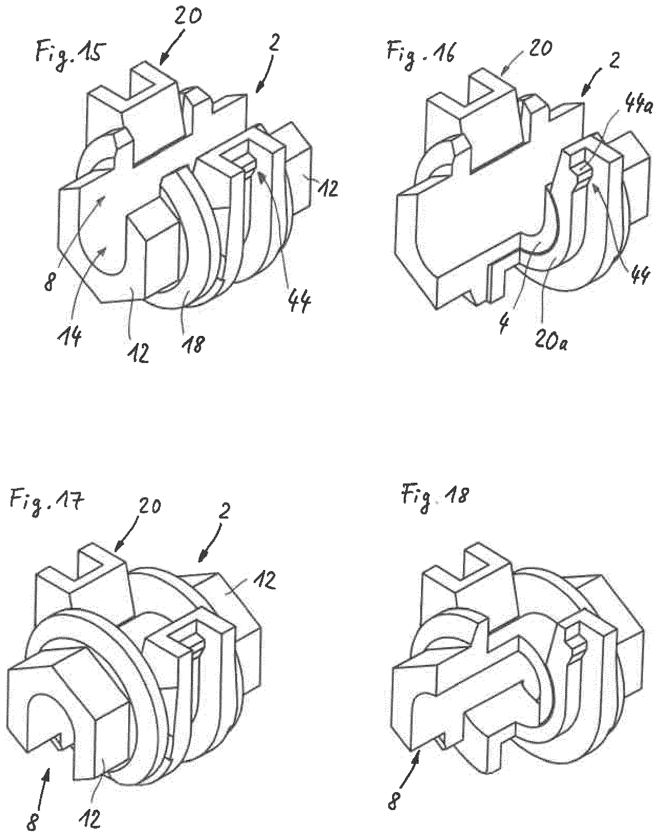

An Enden der ersten Außenfläche 16 sind mit gegenseitigem Abstand zwei flanschartige Begrenzungswände 18 angeordnet, zwischen denen der nachfolgend in Figur 8 bis 14 gezeigte Grundkörper 20 aufnehmbar ist. Fig. 8 zeigt eine Draufsicht von oben, Fig. 12 eine Draufsicht von unten, Fig. 10 eine stirnseitige Ansicht und Fig. 9 eine Schnittansicht gemäß der in Fig. 11 angegebenen Schnittlinie. Fig. 13 zeigt eine Ausschnittsvergrößerung aus einer perspektivischen Ansicht gemäß Fig.14. Fig. 15 bis 18 zeigen perspektivische Ansichten der Befestigungsvorrichtung, wobei der Aufnahmekörper 2 in den Grundkörper eingesetzt ist, und zwar in einer offenen Stellung (Fig. 15, 16) und einer geschlossenen Stellung (Fig. 17, 18).

Der Grundkörper 20 weist einen Wandabschnitt 20a mit einer zweiten Außenfläche 22 zum Einsetzen in eine Halteaufnahme eines Haltemittels auf, wobei die zweite Außenfläche 22 einen zylindermantel- bzw. im Querschnitt halbkreisförmigen Abschnitt 22a und zwei daran anschließende Seitenwände 22b, die parallel zueinander sein können, aufweist.

Der Wandabschnitt 20a bzw. die zweite Außenfläche 22 umschließt einen zweiten Aufnahmeraum 24 im Inneren des Grundkörpers 20, der wie vorstehend beschrieben der Aufnahme des Aufnahmekörpers 2 bzw. der ersten Außenfläche 16 des Aufnahmekörpers 2 dient. Der zweite Aufnahmeraum 24 weist eine Innenfläche 26 auf, die einen zylindermantelförmigen bzw. im Querschnitt halbkreisförmigen Abschnitt 26a aufweist, der sich über mindestens 180° in Umfangsrichtung bezüglich einer Längsachse 20b des Grundkörpers erstreckt, wie dargestellt bspw. über etwa 270°, wobei sich an den zylindermantelförmigen Abschnitt 26a eine in Längsrichtung verlaufende zweite schlitzförmige Öffnung 28 anschließt, durch die der Aufnahmekörper 2 in den zweiten Aufnahmeraum 24 einsetzbar ist. Zur Erleichterung des Einsetzvorgangs schließen sich an den zylindermantelförmigen Abschnitt 26a zwei schräg zueinander abgewinkelte Leitflächen 30 an, die seitliche Begrenzungen der Öffnung 28 bilden.

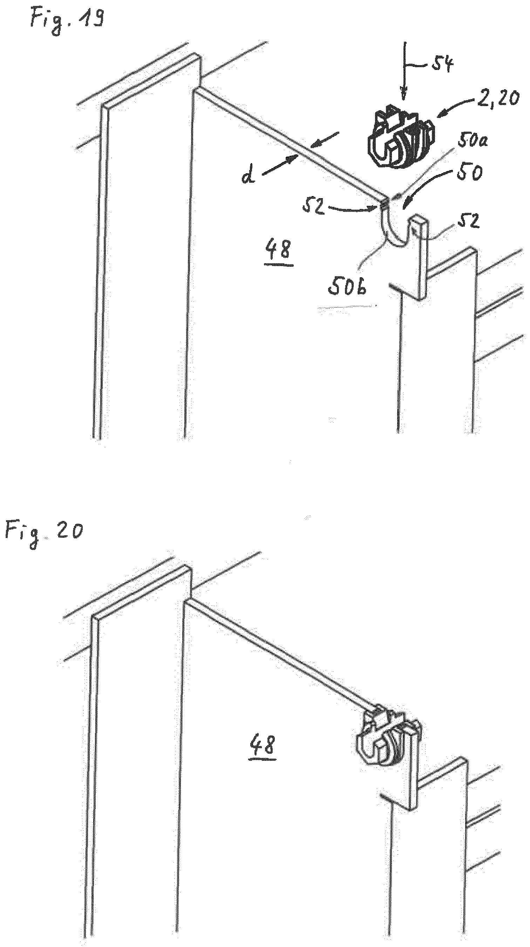

Seitlich benachbart zu der zweiten Außenfläche 22 sind zwei flanschartige Begrenzungswände 32, 34 angeordnet, die sich in Umfangsrichtung bezüglich der Längsachse 20b entlang der zweiten Außenfläche 22 erstecken. Zueinander gerichtete Innenseiten 32a, 34a der Begrenzungswände 32, 34 weisen einen gegenseitigen Abstand d auf, der so gewählt ist, dass er der Dicke einer Halterung 48 (Figur 19) entspricht, die eine Halteaufnahme 50 bildet, in die der Grundkörper 20 eingesetzt und eingerastet werden kann.

Der Aufnahmekörper 2 und der Grundkörper 20 sind mit mehreren Rastelementen versehen. Zunächst weist der Aufnahmekörper 2 ein erstes oder zwei erste Rastelement(e) in Form einer (jeweils) von einer Begrenzungswand 18 in Richtung auf die gegenüberliegende Begrenzungswand 18 vorstehenden Rastnase 40 auf. Zum Zusammenwirken mit dem ersten Rastelement 40 des Aufnahmekörpers 2 weist der Grundkörper 20 ein zweites oder zwei zweite Rastelement(e) in Form einer (jeweils) auf einer Außenseite 32b, 34b der Begrenzungswände 32, 34 angeordneten Rastnase 42 auf. Die Anordnung der Rastnase(n) 40, 42 ist so, dass eine Rastwirkung eintritt, wenn der Aufnahmekörper 2 im in den Grundkörper 20 eingesetzten Zustand gemäß Figur 15, 16 aus der dort dargestellten offenen Stellung, in der sich die Öffnungen 8, 28 von Aufnahme- und Grundkörper überlappen, um bspw. 90° oder 180° in eine geschlossene Stellung verdreht worden ist, wobei Figur 17 und 18 eine Verdrehung um 180° zeigen.

Fig. 6 und 7 zeigen eine Ausführungsform mit insgesamt vier ersten Rastelementen bzw. Rastnasen 40, von denen jeweils zwei an einer Begrenzungswand 18 angeordnet sind und in Richtung auf die gegenüberliegende Begrenzungswand 18 vorstehen. Jeweils zwei Rastnasen 40 auf einer Begrenzungswand sind parallel zueinander angeordnet, und jeweils zwei Rastnasen auf den beiden gegenüberliegenden Begrenzungswänden 18 stehen einander gegenüber. Jede Rastnase 40 weist eine schräg ansteigende Anlauffläche 40a und eine steil abfallende Anschlagfläche 40b auf. Jeweils zwei Anschlagflächen auf einer Begrenzungswand 18 verlaufen parallel zueinander, und jeweils zwei Anschlagflächen auf den gegenüberliegenden Begrenzungswänden sind einander gegenüberliegend angeordnet.

Auf dem Grundkörper 20 sind auf jeder Außenseite 32b, 34b der Begrenzungswände 32, 34 zwei Rastnasen 42 mit jeweils einer schräg ansteigenden Anlauffläche 42a und einer steil abfallenden Anschlagfläche 42b angeordnet. Wie insbesondere Fig. 10 und 11 zeigen, liegen die Anschlagflächen 42b von zwei auf einer Begrenzungswand angeordneten Rastnasen in einer gemeinsamen Ebene, die mit der Längsachse 20b des Grundkörpers 20 einen Winkel von etwa 20° einschließt. Wenn der Aufnahmekörper in den Grundkörper eingesetzt ist, kann er durch Verdrehen in die in Fig. 17, 18 gezeigte geschlossene Stellung gebracht werden. Bei einem Versuch, den Grundkörper aus dieser Stellung wieder in die offene Stellung zu drehen, stößt nach einer geringfügigen Verdrehung jeweils eine Anschlagfläche 40b von zwei ersten Rastelementen 40 gegen eine entsprechende Anschlagfläche 42b von zwei zweiten Rastelementen 42 an, so dass eine weitere Drehung blockiert ist und nur unter erheblich größerem Kraftaufwand möglich ist.

Weiterhin weist der Grundkörper 20 zum Einrasten in das Haltemittel bzw. die Halteaufnahme 50 ein drittes Rastelement in Form einer von der Außenfläche 22 vorstehenden Rastnase 44 auf, wobei zweckmäßigerweise auf jeder Seite der Öffnung 28 eine Rastnase 44 angeordnet ist. Entsprechend weist die Halteaufnahme 50 des Haltemittels 48 gemäß Figur 19 ein viertes Rastelement in Form einer Rastnut 52 auf, bzw. zwei derartige Rastnuten 52, in die die Rastnasen 44 einrasten und den Grundkörper 20 an der Halteaufnahme fixieren können.

Das dritte Rastelement 44 und das vierte Rastelement 52 sind zweckmäßigerweise so ausgebildet, dass der Grundkörper 20 mit eingesetztem Aufnahmekörper 2 durch leichten Druck und unter geringer Verformung zumindest des Grundkörpers in einer Einsetzrichtung 54 in die Halteaufnahme 50 eingesetzt und eingerastet werden kann, dass jedoch der Aufnahmekörper 2 in der geschlossenen Position nicht allein durch einen entgegen der Einsetzrichtung gerichteten Zug an dem aufgenommenen Seil o. Ä. aus dem Grundkörper herausgezogen bzw. zusammen mit dem Grundkörper aus der Halteaufnahme 50 herausgezogen werden kann, jedenfalls nicht ohne Zerstörung von Grundkörper, Aufnahmekörper oder drittem oder viertem Rastelement. Die Einsetzrichtung kann ersichtlich in der Ebene der Seitenwände 22b der zweiten Außenfläche 22 des Grundkörpers 20 liegen. Um die genannte Verriegelungswirkung zu erreichen, weisen die dritten Rastelemente 44 des Grundkörpers 20 eine Anlagefläche 44a auf, die in einer Ebene liegt, welche parallel zur Längsachse 20b des Grundkörpers verläuft, und die senkrecht zu einer Geraden 20c verlaufen kann, die sich senkrecht zur Längsachse 20a des Grundkörpers 20 und durch die zweite Öffnung 28 erstreckt. Die Anlagefläche 44a kann senkrecht oder unter einem Winkel von 70° bis 90° zu den Seitenwänden 22b der zweiten Außenfläche 22 angeordnet sein.

Das vierte Rastelement 52 der Halteaufnahme 50 weist zu den Anlageflächen 44a des Grundkörpers 20 passende Anlageflächen 50a auf.

Die Halteaufnahme 50 weist im Übrigen eine Aufnahmefläche 50b auf, die komplementär zu der zweiten Außenfläche 22 des Grundkörpers 20 ausgebildet ist. Die Halterung 48 ist bevorzugt aus Blech mit einer Dicke d gebildet, die dem vorgenannten Abstand d der Innenseiten 32a, 34a der Begrenzungswände 32, 34 entspricht.

Bei einer solchen Ausbildung der dritten und vierten Rastelemente ist sichergestellt, dass der Grundkörper 20 auch bei Einwirken einer entgegen der Einsetzrichtung wirkenden Last bzw. Zugkraft nicht aus der Halteaufnahme 50 herausgezogen werden kann. Ein Herausnehmen des Grundkörpers kann nur unter Zusammendrücken der die dritten Rastelemente 44 tragenden Teile des Wandabschnitts 20a erfolgen, wobei die dritten Rastelemente 44 von den vierten Rastelementen 52 der Halteaufnahme 50 gelöst werden.

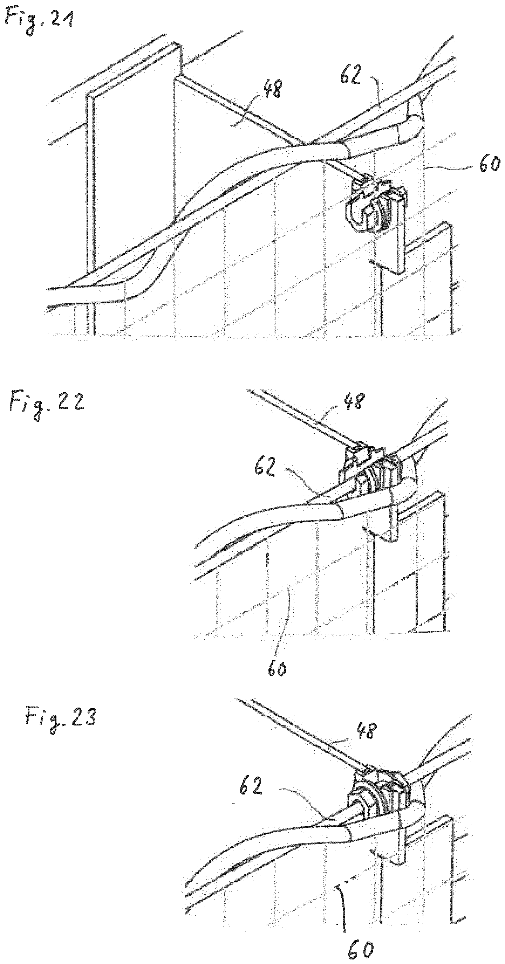

Figur 19 zeigt den Grundkörper 20 mit aufgenommenem Aufnahmekörper 2 unmittelbar vor dem Einsetzen in die Halteaufnahme 50 der Halterung 48, während Figur 20 den eingesetzten und eingerasteten Zustand zeigt. Figur 21 zeigt ein Fangnetz 60 mit einem dieses tragenden Seil 62 vor der Halterung 48, während Figur 22 die Befestigungsvorrichtung mit eingelegtem Seil 62 und noch in offener Stellung zeigt. Figur 23 zeigt schließlich die geschlossene Stellung der Befestigungsvorrichtung, in der der Aufnahmekörper 2 relativ zu dem Grundkörper 20 gegenüber der offenen Stellung um 180° verdreht ist, entsprechend Figur 17 und 18, unter Verwendung eines passenden, an den Werkzeugansatz 12 anzusetzenden Werkzeugs.

### Bezugszeichenliste

- 2: Aufnahmekörper
- 4: Wandabschnitt
- 6: Längsachse
- 8: erste Öffnung
- 8a: Rand
- 12: Werkzeugansatz
- 14: erster Aufnahmeraum
- 14a: Seitenwand
- 14b: halbkreisförmiger Abschnitt
- 16: erste Außenfläche
- 18: Begrenzungswand
- 20: Grundkörper
- 20a: Wandabschnitt
- 20b: Längsachse
- 20c: Gerade
- 22: zweite Außenfläche
- 22a: halbkreisförmiger Abschnitt
- 22b: Seitenwand
- 24: zweiter Aufnahmeraum
- 26: Innenwand
- 26a: halbkreisförmiger Abschnitt
- 28: zweite Öffnung
- 30: Leitfläche
- 32, 34: Begrenzungswand
- 32a, 34a: Innenseite
- 32b, 34b: Außenseite
- 40: erstes Rastelement (Rastnase)
- 40a: Anlauffläche
- 40b: Anschlagfläche
- 42: zweites Rastelement (Rastnase)
- 42a: Anlauffläche
- 42b: Anschlagfläche
- 44: drittes Rastelement (Rastnase)
- 44a: Anlagefläche
- 48: Halterung (Haltemittel)
- 50: Halteaufnahme
- 50a: Anlagefläche
- 50b: Aufnahmefläche
- 52: viertes Rastelement (Rastnut)
- 54: Einsetzrichtung
- 60: Fangnetz
- 62: Seil

- d: Abstand (32a von 34a, Dicke von 48)

## Patentansprüche

1. Befestigungsvorrichtung (2, 20) zum Anbringen eines strangförmigen Elements wie Seil oder Kabel an einem ortsfesten Haltemittel (48), mit einem rohrförmigen Aufnahmekörper (2), der eine erste, sich um eine Längsachse (6) des Aufnahmekörpers (2) in einer Umfangsrichtung erstreckende Außenfläche (16), eine in Richtung der Längsachse (6) verlaufende erste schlitzförmige Öffnung (8) und einen in Richtung der Längsachse (6) verlaufenden ersten Aufnahmeraum (14) zum Einlegen und Aufnehmen eines strangförmigem Elements (62) aufweist, und mit einem Grundkörper (20), der eine zweite, sich um eine Längsachse (20b) des Grundkörpers (20) in einer Umfangsrichtung erstreckende Außenfläche (22) zum Einsetzen in eine Halteaufnahme (50) des Haltemittels (48), einen zweiten, in Richtung der Längsachse (20b) verlaufenden Aufnahmeraum (24) zum Einsetzen und Halten des Aufnahmekörpers (2) und eine zweite, in Richtung der Längsachse (20b) verlaufende schlitzförmige Öffnung (28) aufweist, durch die der Aufnahmekörper (2) in den zweiten Aufnahmeraum (24) einsetzbar ist, wobei in einem Aufnahmezustand, in dem der Aufnahmekörper (2) in den zweiten Aufnahmeraum (24) des Grundkörpers (20) eingesetzt ist, der Aufnahmekörper (2) um eine in Richtung der Längsachsen (6, 20b) verlaufende Drehachse relativ zu dem Grundkörper (20) verdrehbar ist, **dadurch gekennzeichnet, dass** der Aufnahmekörper mit einem Werkzeugansatz (12) zum Zusammenwirken mit einem Werkzeug zum Bewirken einer Drehung um die Drehachse versehen ist.

2. Befestigungsvorrichtung nach Anspruch 1, **dadurch gekennzeichnet, dass** der Aufnahmekörper (2) im Aufnahmezustand klemmend aufgenommen ist und gegen ein vorgebbares Haltemoment drehbar ist.

3. Befestigungsvorrichtung nach Anspruch 1 oder 2, **dadurch gekennzeichnet, dass** die erste Außenfläche (16) im Querschnitt kreisförmig, oval oder abgerundet polygonal ausgebildet ist.

4. Befestigungsvorrichtung nach einem der vorangehenden Ansprüche, **dadurch gekennzeichnet, dass** der zweite Aufnahmeraum (24) eine Innenfläche aufweist, die im Querschnitt kreisförmig, oval oder abgerundet polygonal ausgebildet ist.

5. Befestigungsvorrichtung nach einem der vorangehenden Ansprüche, **dadurch gekennzeichnet, dass** der Aufnahmekörper (2) ein erstes Rastelement (40) und der Grundkörper (20) ein zum Zusammenwirken mit dem ersten Rastelement (40) bestimmtes zweites Rastelement (42) aufweist, wobei mit den ersten und zweiten Rastelementen (40, 42) eine vorgegebene relative Drehstellung von Aufnahmekörper (2) und Grundkörper (20) rastend festlegbar oder begrenzbar ist.

6. Befestigungsvorrichtung nach einem der vorangehenden Ansprüche, **dadurch gekennzeichnet, dass** der Aufnahmekörper (2) und/oder der Grundkörper (20) ein Mittel zum formschlüssigen Zusammenwirken im Aufnahmezustand aufweisen, durch das eine Verlagerung des Aufnahmekörpers (2) in Richtung der Längsachsen (6, 20b) aus dem zweiten Aufnahmeraum (24) verhindert ist.

7. Befestigungsvorrichtung nach Anspruch 6, **dadurch gekennzeichnet, dass** das Mittel zum formschlüssigen Zusammenwirken durch eine bezüglich der Drehachse umlaufende Nut im Aufnahmekörper (2) oder Grundkörper (20) und einen in diese Nut eingreifenden Vorsprung von Grundkörper (20) oder Aufnahmekörper (2) gebildet ist.

8. Befestigungsvorrichtung nach Anspruch 6, **dadurch gekennzeichnet, dass** das Mittel zum formschlüssigen Zusammenwirken durch zwei flanschartige Begrenzungswände (18) gebildet ist, die an dem Aufnahmekörper (2) mit Abstand an Enden der ersten Außenfläche (16) angeordnet sind und zwischen denen im Aufnahmezustand der Grundkörper (20) aufnehmbar ist.

9. Befestigungsvorrichtung nach einem der vorangehenden Ansprüche, **dadurch gekennzeichnet, dass** an dem Grundkörper (20) ein drittes Rastelement (44) zum Zusammenwirken mit einem vierten Rastelement (52) der Halteaufnahme (50) ausgebildet ist.

10. Befestigungsvorrichtung nach Anspruch 9, **dadurch gekennzeichnet, dass** das dritte Rastelement (44) eine Anlagefläche (44a) aufweist, die in einer Ebene liegt, die parallel zu der Längsachse (20b) des Grundkörpers (20) verläuft und senkrecht zu einer Geraden (20c) sein kann, welche sich senkrecht zur Längsachse (20b) des Grundkörpers (20) und durch die zweite Öffnung (28) erstreckt.

11. Befestigungsvorrichtung nach einem der vorangehenden Ansprüche, **dadurch gekennzeichnet, dass** sich der zweite Aufnahmeraum (24) des Grundkörpers (20) bezüglich der Längsachse (20b) um mehr als 180° in Umfangsrichtung erstreckt und der Grundkörper (20) zum Einsetzen des Aufnahmekörpers (2) quer zu der Längsachse (20b) flexibel aufweitbar ist.

12. Befestigungsanordnung mit einer in einer Halteaufnahme (50) eines ortsfesten Haltemittels (48) aufgenommenen Befestigungsvorrichtung nach Anspruch 9 oder 10, wobei das dritte Rastelement (44) zum Zusammenwirken mit dem vierten Rastelement (52) ausgebildet ist und der Grundkörper (20) mit dem darin aufgenommenen Aufnahmekörper (2) rastend in die Halteaufnahme (50) einsetzbar oder eingesetzt ist.

13. Befestigungsanordnung nach Anspruch 12, **dadurch gekennzeichnet, dass** die Halteaufnahme (50) an Außenabmessungen des Grundkörpers (20) im Aufnahmezustand angepasst ist und eine Aufweitung des Grundkörpers (20) zum Herausbewegen des Aufnahmekörpers (2) nicht zulässt.

14. Befestigungsanordnung nach Anspruch 12 oder 13, **dadurch gekennzeichnet, dass** das vierte Rastelement (52) der Halteaufnahme (50) eine zu der Anlagefläche (44a) des Grundkörpers (20) passende Anlagefläche (50a) aufweist.

## Claims

1. Fastening device (2, 20) for attaching a strand-shaped element like a rope or cable to a stationary holding means (48), said device comprising a tubular receiving body (2) which comprises a first outer surface (16) that extends in a circumferential direction around a longitudinal axis (6) of the receiving body (2), a first slit-shaped opening (8) that extends in the direction of the longitudinal axis (6) and a first receiving space (14) that extends in the direction of the longitudinal axis (6) for inserting and receiving a strand-shaped element (62), and said device comprising a base body (20) which comprises a second outer surface (22), which extends in a circumferential direction around a longitudinal axis (20b) of the base body (20), for insertion into a holding seat (50) of the holding means (48), a second receiving space (24) that extends in the direction of the longitudinal axis (20b) for inserting and holding the receiving body (2) and a second slit-shaped opening (28) which extends in the direction of the longitudinal axis (20b) and through which the receiving body (2) can be inserted into the second receiving space (24), it being possible, in a receiving state in which the receiving body (2) has been inserted into the second receiving space (24) of the base body (20), to rotate the receiving body (2) relative to the base body (20) about an axis of rotation that extends in the direction of the longitudinal axes (6, 20b), **characterised in that** the receiving body is provided with a tool attachment portion (12) for cooperation with a tool for causing a rotation about the axis of rotation.

2. Fastening device according to claim 1, **characterised in that** the receiving body (2) is received in a clamped manner in the receiving state and can be rotated against a predeterminable holding torque.

3. Fastening device according to either claim 1 or claim 2, **characterised in that** the first outer surface (16) has a circular, oval or rounded polygonal cross-section.

4. Fastening device according to any of the preceding claims, **characterised in that** the second receiving space (24) comprises an inner surface which has a circular, oval or rounded polygonal cross-section.

5. Fastening device according to any of the preceding claims, **characterised in that** the receiving body (2) comprises a first latching element (40) and the base body (20) comprises a second latching element (42) intended for cooperation with the first latching element (40), it being possible to set or delimit a predetermined relative rotational position of the receiving body (2) and base body (20) in a latching manner by means of the first and second latching elements (40, 42).

6. Fastening device according to any of the preceding claims, **characterised in that** the receiving body (2) and/or the base body (20) comprise a means for interlocking cooperation in the receiving state, by means of which a displacement of the receiving body (2) out of the second receiving space (24) in the direction of the longitudinal axes (6, 20b) is prevented.

7. Fastening device according to claim 6, **characterised in that** the means for interlocking cooperation is formed of a groove in the receiving body (2) or base body (20) that is circumferential with respect to the axis of rotation and a projection of the base body (20) or receiving body (2) that engages in said groove.

8. Fastening device according to claim 6, **characterised in that** the means for interlocking cooperation is formed of two flange-like delimiting walls (18), which are arranged at a distance from one another at ends of the first outer surface (16) on the receiving body (2) and between which the base body (20) can be received in the receiving state.

9. Fastening device according to any of the preceding claims, **characterised in that** a third latching element (44) is formed on the base body (20) for cooperation with a fourth latching element (52) of the holding seat (50).

10. Fastening device according to claim 9, **characterised in that** the third latching element (44) comprises a contact surface (44a) which lies in a plane that extends in parallel with the longitudinal axis (20b) of the base body (20) and that can be perpendicular to a straight line (20c) which extends perpendicularly to the longitudinal axis (20b) of the base body (20) and through the second opening (28).

11. Fastening device according to any of the preceding claims, **characterised in that** the second receiving space (24) of the base body (20) extends in the circumferential direction by more than 180° with respect to the longitudinal axis (20b) and the base body (20) can be flexibly expanded transversely to the longitudinal axis (20b) for insertion of the receiving body (2).

12. Fastening arrangement comprising a fastening device according to either claim 9 or claim 10 that is received in a holding seat (50) of a stationary holding means (48), wherein the third latching element (44) is designed to cooperate with the fourth latching element (52) and the base body (20) is or can be inserted into the holding seat (50) in a latching manner together with the receiving body (2) received therein.

13. Fastening arrangement according to claim 12, **characterised in that** the holding seat (50) is adapted to the outer dimensions of the base body (20) in the receiving state and does not allow the base body (20) to expand such that the receiving body (2) can move out.

14. Fastening arrangement according to either claim 12 or claim 13, **characterised in that** the fourth latching element (52) of the holding seat (50) comprises a contact surface (50a) that mates with the contact surface (44a) of the base body (20).

## Revendications

1. Dispositif de fixation (2, 20) pour attacher un élément en forme de brin, comme une corde ou un câble, à dispositif de retenue fixe (48), ledit dispositif comprenant un corps récepteur tubulaire (2) comprenant une première surface extérieure (16) déployée dans une direction circonférentielle autour d'un axe longitudinal (6) du corps récepteur (2), une première ouverture en fente (8) s'étendant dans la direction de l'axe longitudinal (6) et un premier espace récepteur (14) s'étendant dans la direction de l'axe longitudinal (6) pour l'insertion et la réception d'un élément en forme de brin (62), et ledit dispositif comprenant un corps de base (20) comprenant une deuxième surface extérieure (22), s'étendant dans une direction circonférentielle autour d'un axe longitudinal (20b) du corps de base (20), pour l'insertion dans un siège de retenue (50) du dispositif de retenue (48), un deuxième espace récepteur (24) s'étendant dans la direction de l'axe longitudinal (20b) pour l'insertion et le maintien du corps récepteur (2) et une deuxième ouverture en fente (28) s'étendant dans la direction de l'axe longitudinal (20b) et à travers laquelle le corps récepteur (2) peut être inséré dans le deuxième espace récepteur (24), étant possible, dans un état récepteur dans lequel le corps récepteur (2) a été inséré dans le deuxième espace récepteur (24) du corps de base (20), de faire tourner le corps récepteur (2) relativement au corps de base (20) autour d'un axe de rotation s'étendant dans la direction des axes longitudinaux (6, 20b), **caractérisé en ce que** le corps récepteur est doté d'une partie de fixation de l'outil (12) coopérant avec un outil pour déterminer une rotation autour de l'axe de rotation.

2. Dispositif de fixation selon la revendication 1, **caractérisé en ce que** le corps récepteur (2) est reçu de façon serrée dans l'état reçu, et peut être mis en rotation contre un couple de maintien pouvant être déterminé préalablement.

3. Dispositif de fixation selon la revendication 1 ou la revendication 2, **caractérisé en ce que** la première surface externe (16) présente une section transversale circulaire, ovale, ou polygonale arrondie.

4. Dispositif de fixation selon une quelconque des revendications précédentes, **caractérisé en ce que** le deuxième espace récepteur (24) comprend une surface interne possédant une section transversale circulaire, ovale, ou polygonale arrondie.

5. Dispositif de fixation selon une quelconque des revendications précédentes, **caractérisé en ce que** le corps récepteur (2) comprend un premier élément de verrouillage (40), et le corps de base (20) comprend un deuxième élément de verrouillage (42) conçu pour coopérer avec le premier élément de verrouillage (40), étant donné qu'il est possible de fixer ou de délimiter une position rotative relative prédéterminée du corps récepteur (2) et du corps de base (20) de façon verrouillante par le biais des premier et deuxième éléments de verrouillage (40, 42).

6. Dispositif de fixation selon une quelconque des revendications précédentes, **caractérisé en ce que** le corps récepteur (2) et/ou le corps de base (20) comprennent un dispositif pour une coopération à verrouillage réciproque dans l'état récepteur, par le biais duquel un déplacement du corps récepteur (2) hors du deuxième espace récepteur (24), dans la direction des axes longitudinaux (6, 20b), est empêché.

7. Dispositif de fixation selon la revendication 6, **caractérisé en ce que** le dispositif pour la coopération à verrouillage réciproque est composé d'une cannelure, dans le corps récepteur (2) ou le corps de base (20), circonférentielle relativement à l'axe de rotation, et d'une saillie du corps de base (20) ou du corps récepteur (2), qui s'engage dans ladite cannelure.

8. Dispositif de fixation selon la revendication 6, **caractérisé en ce que** le dispositif pour la coopération à verrouillage réciproque est composé de deux parois de délimitation du type collerette (18), agencées à une distance l'une de l'autre à des bouts de la première surface extérieure (16) sur le corps récepteur (2), et entre lesquelles le corps de base (20) peut être reçu à l'état de réception.

9. Dispositif de fixation selon une quelconque des revendications précédentes, **caractérisé en ce qu'**un troisième élément de verrouillage (44) est formé sur le corps de base (20) pour coopérer avec un quatrième élément de verrouillage (52) du siège de retenue (50).

10. Dispositif de fixation selon la revendication 9, **caractérisé en ce que** le troisième élément de verrouillage (44) comprend une surface de contact (44a) située dans un plan s'étendant parallèlement à l'axe longitudinal (20b) du corps de base (20), et pouvant être perpendiculaire à une ligne droite (20c) s'étendant perpendiculairement à l'axe longitudinal (20b) du corps de base (20) et traversant la deuxième ouverture (28).

11. Dispositif de fixation selon une quelconque des revendications précédentes, **caractérisé en ce que** le deuxième espace récepteur (24) du corps de base (20) s'étend dans une direction circonférentielle de plus de 180° relativement à l'axe longitudinal (20b), et le corps de base (20) peut être déployé de façon flexible transversalement à l'axe longitudinal (20b) pour l'insertion dans le corps récepteur (2).

12. Agencement de fixation comprenant un dispositif de fixation selon la revendication 9 ou la revendication 10, reçu dans un siège de retenue (50) du dispositif d'un retenue fixe (48), le troisième élément de verrouillage (44) étant conçu pour fonctionner en coopération avec le quatrième élément de verrouillage (52), et le corps de base (20) est, ou peut être, inséré dans le siège de retenue (50) de façon verrouillante conjointement avec le corps récepteur (2) qui y est reçu.

13. Agencement de fixation selon la revendication 12, **caractérisé en ce que** le siège de retenue (50) est adapté aux dimensions extérieures du corps de base (20) dans l'état récepteur, et ne permet pas l'expansion du corps de base (20), afin que le corps récepteur (2) puisse sortir.

14. Agencement de fixation selon la revendication 12 ou la revendication 13, **caractérisé en ce que** le quatrième élément de verrouillage (52) du siège de retenue (50) comprend une surface de contact (50a), qui s'accouple avec la surface de contact (44a) du corps de base (20).
